# EUROPEAN PATENT APPLICATION

(11) **EP 1 331 815 A2**
(43) Date of publication of application: **30.07.2003**
(21) Application number: 03001613.3
(22) Date of filing: 24.01.2003
(51) Int. Cl.: H04N 5/74

(54) **Projection-type display device having distortion correcting function**

(30) Priority: 28.01.2002 JP 2002018407
(71) Applicant: NEC Viewtechnology, Ltd., Tokyo (JP)
(72) Inventor: Mochizuki, Kazuo, c/oNEC Viewtechnology, Ltd., Tokyo (JP)
(74) Representative: Glawe, Delfs, Moll & Partner

(57) **Abstract**

A projection-type display device having a liquid crystal panel (8) is provided which is capable of correcting for distortions in horizontal and vertical directions even when the liquid crystal panel (8) is placed in a position other than such a position that the liquid crystal. panel (8) is right opposite to the screen. To display a video for correcting for distortions on the liquid crystal panel (8), location data of a video signal to be output to the liquid crystal panel (8) is stored in advance into an address storing memory (5) as address data of a frame memory (3). Address data of the frame memory (3) being stored in the address storing memory (5) is read in synchronization with a timing signal and, based on a result from the reading, a video signal is read from a corresponding address of the frame memory (3) and a video based on the video signal is displayed on the liquid crystal panel (8). Thus, by displaying the video for correcting for distortions on the liquid crystal panel (8), correction for distortions can be achieved.

## Description

### BACKGROUND OF THE INVENTION

### Field of the Invention

The present invention relates to a projection-type display device provided with a display panel device and having a function of correcting for distortions in horizontal and vertical directions occurring when a video displayed on the display panel device in response to a video signal is projected onto a screen.

The present application claims priority of Japanese Patent Application No. 2002-018407 filed on January 28, 2002, which is hereby incorporated by reference.

### Description of the Related Art

In a projection-type display device (hereinafter may be referred simply to as a "PJ display device") provided with a display section and being typified by a liquid crystal projector, if a screen is placed in such a position that the screen is right opposite to the display section, a video is projected on the screen at an aspect ratio as originally aimed.

However, if a screen is placed in a position other than such a position that the screen is right opposite to the display section, a distortion including a trapezoidal distortion being called a "keystone distortion" occurs in a video projected onto the screen.

In the case where a scanning line in a display section for the PJ display device is driven by scanning of an electromagnetic coil as in the case where a CRT (Cathode Ray Tube) is used as the display section, the distortion can be removed since a position to be displayed on the screen can be made variable by adjusting a magnetic field intensity used for scanning by using a magnetic coil, that is, by calibrating the intensity of the magnetic field.

However, in the case where pixels (picture elements) in a display panel device are formed in a dot-matrix form as in the case where a liquid crystal panel device is used as the display section, a method for controlling the electromagnetic coil as described above cannot be used.

### SUMMARY OF THE INVENTION

In view of the above, it is an object of the present invention to provide a projection-type display device provided with a display panel device and having a function of correcting for distortions in horizontal and vertical directions by changing a shape of a video displayed on the display panel device, on which the video is projected onto a screen even when the display panel device is placed in a position other than such a position that the display panel device is right opposite to the screen.

According to a first aspect of the present invention, there is provided a projection-type display device with a display panel device and having a function of correcting for distortions in horizontal and vertical directions occurring when a video displayed in response to a video signal on the display panel device is projected on a screen, including:
a frame memory to store the video signal;
an address generating means to generate an address data of the frame memory on which the video signal is to be written based on a synchronous signal in horizontal and vertical directions;
an address storing memory to store, in advance, location data of the video signal to be displayed on the display panel device in horizontal and vertical directions as address data of the frame memory in order to display the video for correcting for the distortions on the display panel device;
a timing producing means to produce a timing signal in horizontal and vertical directions used to drive the display panel device; and
wherein, based on address data of the frame memory read from the address storing memory in synchronization with the timing signal, the video signal is read from a corresponding address of the frame memory and a video corresponding to the video signal having been read is displayed on the display panel device.

In the foregoing, a preferable mode is one wherein the video for correcting for the distortions is configured to have a shape distorted in advance in reverse directions to how a projected video onto the screen is distorted, hereby correcting for the distortions of the projected video onto the screen.

Also, a preferable mode is one wherein only location data of the video signals indicating representative points of a block obtained by dividing the video for correcting for the distortions in a unit of the block is stored in the address storing memory as the address data of the frame memory.

Also, a preferable mode is one wherein the location data of the video signals indicating points other than the representative points is calculated by an interpolation process represented by a weighted average method based on the location data of the video signals of the representative points being stored in the address storing memory.

Also, a preferable mode is one that wherein includes an input signal processing means to perform predetermined inputting processing on the video signal and to output the video signal to the frame memory and an output signal processing means to perform predetermined outputting processing on a video signal read from the frame memory and to output the video signal to the display panel device.

Furthermore, a preferable mode is one wherein the display panel device is of a dot-matrix type.

With the above configurations, by providing the frame memory used to store the video signal and the address storing memory used to store, in advance, the location data of the video signals in the horizontal and the vertical directions to be displayed on the display panel device as the address data of the frame memory in order to display the video for correcting for distortions on the display panel device, address data of the frame memory is read from the address storing memory in synchronization with the timing signal used to drive the display panel device and, based on a result from the reading, the video signal is read from a corresponding address of the frame memory and a video corresponding to the video signal is displayed on the projection-type display device.

Thus, by displaying the video for correcting for the distortions on the display panel device, the distortions in the horizontal and the vertical directions can be corrected for, which enables the video to be projected onto the screen at an aspect ratio as originally aimed. For example, the video for correcting for the distortions is configured to have a shape distorted in advance in reverse directions to how a projected video onto the screen is distorted.

Moreover, by calculating and storing in advance the location data of the video for correcting for the distortions in the address storing memory as the address data of the frame memory, not only a trapezoidal distortion but also any type of distortion including geometric and non-linear distortions such as a barrel distortion, a pincushion distortion, or a like can be corrected for. Therefore, even if a non-planar screen (for example, spherical or parabolic screen) exists, by saving the location data of the video for correcting for the distortions, it is possible to correct for the distortions occurring in the video to be projected onto such the non-planar screen.

### BRIEF DESCRIPTION OF THE DRAWINGS

The above and other objects, advantages, and features of the present invention will be more apparent from the following description taken in conjunction with the accompanying drawings in which:
Figs. 1A, 1B, and 1C are diagrams explaining principles of correcting for distortions achieved by using a projection-type display device having a function of correcting for distortions according to the present invention;
Fig. 2 is a schematic block diagram showing the projection-type display device having a function of correcting for distortions according to one embodiment of the present invention;
Fig. 3 is a diagram showing an example of a shape of a video to be displayed on a liquid crystal panel used for correction for distortions being employed in the one embodiment of the present invention; and
Fig. 4 is a diagram showing an example of an address data of a frame memory to be written onto an address storing memory, as shown in Fig. 2, being employed in the one embodiment of the present invention.

### DETAILED DESCRIPTION OF THE PREFERRED EMBODIMENTS

Best modes of carrying out the present invention will be described in further detail using various embodiments with reference to the accompanying drawings.

### Principle of the Present Invention

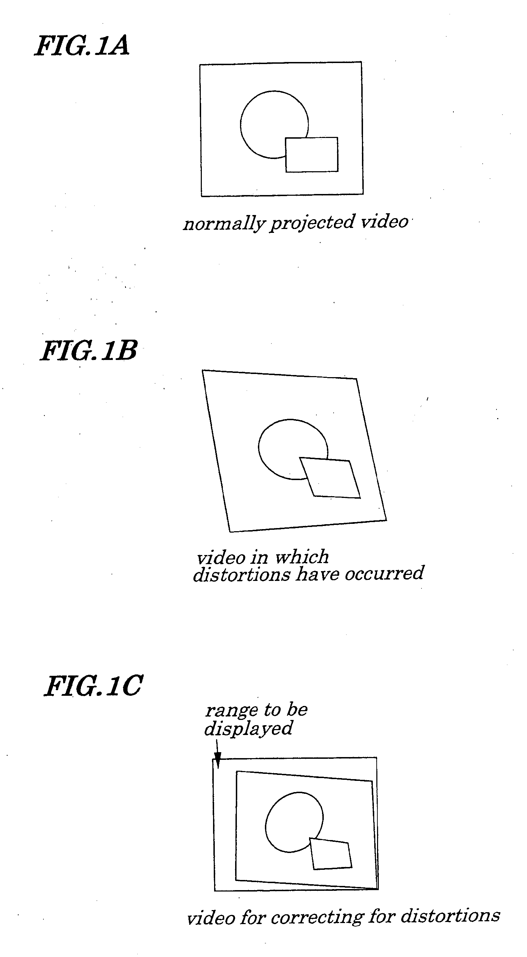

Figures 1A, 1B, and 1C are diagrams explaining principles of correcting for a distortion achieved by using a PJ display device provided with a display panel device and having a function of correcting for distortions according to the present invention. If the display panel device making up the PJ display device is placed in such a position that the display panel device is right opposite to the screen, as shown in the Fig. 1A, a normal video having an aspect ratio as originally aimed is projected onto the screen. The obtained video provides a shape of a displayed video that is finally desired.

However, if the display panel device is not placed in such a position that the display panel device is right opposite to the screen, as shown in Fig. 1B, a distortion occurs in the video projected onto the screen.

In the present invention, as shown in Fig. 1C, a video for correcting for distortions, having a shape distorted in advance in reverse directions to how a projected video onto the screen is distorted, is configured to be displayed in a display range on the display panel device, hereby correcting for said distortions of a projected video onto said screen. Moreover, the distortion to be corrected for in the present invention includes not only a trapezoidal distortion being called a "keystone distortion" but also geometric and non-linear distortions such as a barrel distortion, a pincushion distortion, or a like.

### Embodiment

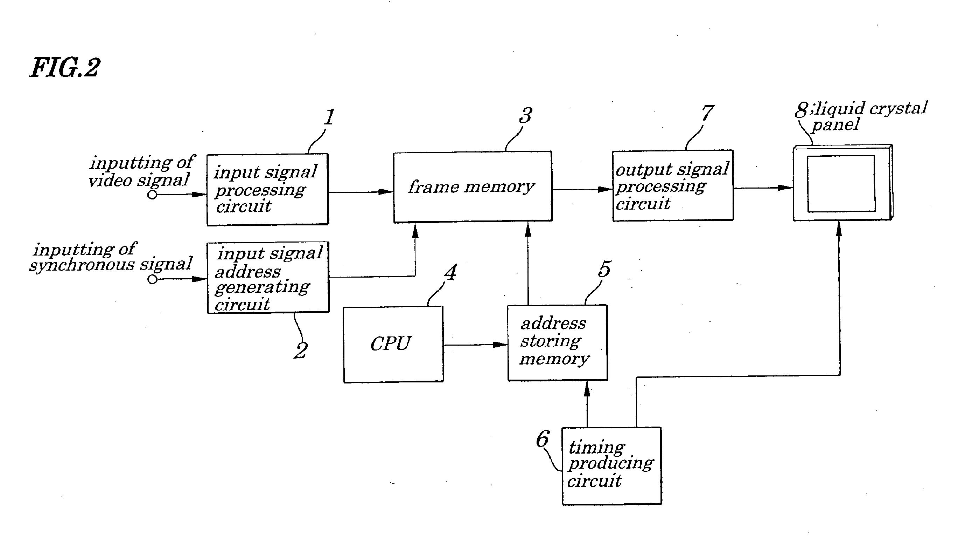

Fig. 2 is a schematic block diagram showing the PJ display device having a function of correcting for distortions according to the embodiment of the present invention.

As shown in Fig. 2, the PJ display device according to the embodiment includes an input signal processing circuit 1, an input signal address generating circuit 2, a frame memory 3, a CPU 4, an address storing memory 5, a timing producing circuit 6, an output signal processing circuit 7, and a liquid crystal panel 8 serving as a dot-matrix type display panel device.

The input signal processing circuit 1 performs processing of calibrating a level of an input video signal, converting a format, or a like. The format conversion includes, for example, conversion from YUV (Y being a signal representing luminance, U being a signal representing a color, and V being a signal also representing a color) signals to RGB (Red, Green, and Blue) signals, or a like.

The input signal address generating circuit 2 produces address data of the frame memory 3 on which a video signal output from the input signal processing signal 1 is to be written based on an input synchronous signal (synchronous signal in a horizontal or vertical direction).

The frame memory 3 stores a video signal output from the input signal processing circuit 1 at an address produced by the input signal address generating circuit 2.

The timing producing circuit 6 produces a timing signal (horizontal or vertical signal) used to drive the liquid crystal panel 8.

The CPU 4, in order to display a video for correcting for the distortion described above on the liquid crystal panel 8, produces location data of a video signal to be output to the liquid crystal panel 8 as address data of the frame memory 3 and writes in advance the produced address data onto the address storing memory 5.

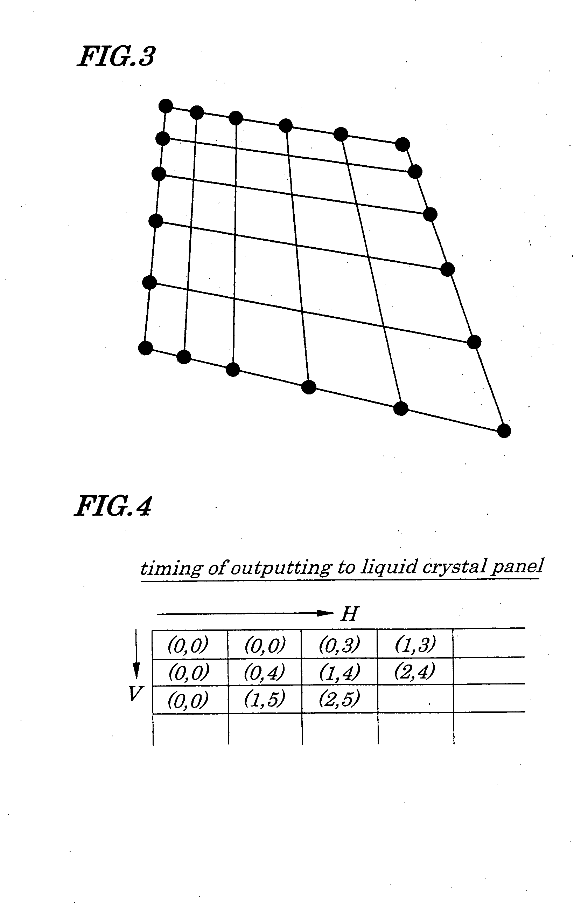

More particularly, the CPU 4 produces address data used to display a video for correcting for distortions as shown in Fig. 3 on the liquid crystal panel 8 as address data of the frame memory 3. This address data can be obtained by performing arithmetic calculations on the timing signal produced by the timing producing circuit 6 and on a shape of the video to be displayed on the liquid crystal panel 8 so as to correct for distortions.

Moreover, the CPU 4, assuming that the liquid crystal panel 8 is placed at various angles relative to the screen, stores in advance some pieces of location data of the video for correcting for distortions into the address storing memory 5 as address data of the frame memory 3.

In the address storing memory 5, address data of the frame memory 3 is read in synchronization with a timing signal (signal in a horizontal or vertical direction) used to drive the liquid crystal panel 8, which is used for reading an address of the frame memory 3.

In the frame memory 3, reference is made to address data of the frame memory 3 read from the address storing memory 5 and a video signal is read from a corresponding address of the frame memory 3.

The output signal processing circuit 7 changes a resolution if a resolution of an output video signal read from the frame memory 3 does not match a resolution of an input video signal, that is, performs scaling processing.

The liquid crystal panel 8, in synchronization with a timing signal (signal in a horizontal or vertical direction) produced in the timing producing circuit 6, displays a video corresponding to a video signal output from an output signal processing circuit 7. The video displayed in the liquid crystal panel 8 is projected onto a screen (not shown).

In the PJ display device having such configurations as described above, in order to display a video for correcting for distortions, location data of a video signal to be output to the liquid crystal panel 8 is in advance stored in the address storing memory 5 as address data of the frame memory 3. Then, address data of the frame memory 3 stored in the address storing memory 5 is read in synchronization with a timing signal (signal in a horizontal or vertical direction) to drive the liquid crystal panel 8 and, based on a result from the reading, a video signal is read from a corresponding address of the frame memory 3 and a video corresponding to the read video signal is displayed on the liquid crystal panel 8.

Thus, by displaying the video for correcting for distortions on the liquid crystal panel 8, correction for distortions in horizontal and vertical directions can be achieved.

The CPU 4 generates address data of the frame memory 3, for example, as shown in Fig. 4 and writes the generated address data onto the address storing memory 5.

In the example in Fig. 4, a location of a video signal in horizontal (H) and vertical (V) directions is shown in a form of a table and the location (x, y) of a video signal being stored in the frame memory 3 is partially described. Actually, if tables of this form that can cover the number of pixels (picture elements) in the liquid crystal panel 8 exist, reference to address data be storing in the address storing memory 5 can be made possible.

In the embodiment, address data corresponding to the number of pixels in the liquid crystal panel 8 is written onto the address storing memory 5. However, in order to scale down a circuit of the PJ display device, it is possible to reduce a scale of the address storing memory 5, as shown below.

That is, if a video is projected on a plane such as a screen, a video for correcting for distortions may be divided into several blocks and only location data of video signals of representative points of each of the divided blocks is stored in the address storing memory 5 and location data of video signals indicating intermediate points of each of the divided blocks is calculated by an interpolation process represented by a weighted average method to be calculated based on location data of representative points of each of the divided blocks.

For example, in the case of production of location data in a range of 64 dots x 64 dots for an output video signal, only location data of video signals of representative points at four corners is stored in the address storing memory 5 and location data of video signals indicating intermediate points can be produced by the weighted average method to be calculated based on location data of representative points at the four corners.

By performing the processing as described, it is possible to scale down a memory of the address storing memory 5.

It is apparent that the present invention is not limited to the above embodiments but may be changed and modified without departing from the scope and spirit of the invention.

## Claims

1. A projection-type display device provided with a display panel device (8) and having a function of correcting for distortions in horizontal and vertical directions occurring when a video displayed in response to a video signal on said display panel device (8) is projected on a screen, comprising:
a frame memory (3) to store said video signal;
an address generating means (2) to generate an address data of said frame memory (3) on which said video signal is to be written based on a synchronous signal in horizontal and vertical directions;
an address storing memory (5) to store, in advance, location data of said video signal to be displayed on said display panel device (8) in horizontal and vertical directions as address data of said frame memory (3) in order to display a video for correcting for said distortions on said display panel device (8);
a timing producing means (6) to produce a timing signal in horizontal and vertical directions used to drive said display panel device (8); and
wherein, based on address data of said frame memory (3) read from said address storing memory (5) in synchronization with said timing signal, said video signal is read from a corresponding address of said frame memory (3) and a video corresponding to said video signal having been read is displayed on said display panel device (8).

2. The projection-type display device according to Claim 1, wherein said video for correcting for said distortions is configured to have a shape distorted in advance in reverse directions to how a projected video onto said screen is distorted, hereby correcting for said distortions of said projected video onto said screen.

3. The projection-type display device according to Claim 1 or Claim 2, wherein only location data of said video signals indicating representative points of a block obtained by dividing said video for correcting for said distortions in a unit of said block is stored in said address storing memory (5) as said address data of said frame memory (3).

4. The projection-type display device according to Claim 3, wherein said location data of said video signals indicating points other than said representative points is calculated by an interpolation process represented by a weighted average method based on said location data of said video signals of said representative points being stored in said address storing memory (5).

5. The projection-type display device according to any one of Claims 1 to 4, further comprising an input signal processing means (1) to perform predetermined inputting processing on said video signal and to output said video signal to said frame memory (3) and an output signal processing means (7) to perform predetermined outputting processing on said video signal read from said frame memory (3) and to output said video signal to said display panel device (8).

6. The projection-type display device according to any one of Claims 1 to 5, wherein said display panel device (8) is of a dot-matrix type.
